# EUROPEAN PATENT SPECIFICATION

(11) **EP 1 684 458 B1**
(45) Date of publication and mention of the grant of the patent: **19.09.2018**
(21) Application number: 04738267.6
(22) Date of filing: 22.06.2004
(51) Int. Cl.: H04L 12/26, H04L 12/14, H04L 29/12

(54) **A METHOD OF CALCULATING BROADBAND ACCESS SERVER DHCP USER'S ON-LINE TIME**
VERFAHREN ZUM BERECHNEN VON BREITBANDZUGANGS-SERVER-DHCP-BENUTZER-ONLINE-ZEIT
PROCÉDÉ SERVANT À CALCULER LE TEMPS EN LIGNE D'UN UTILISATEUR DE SERVEUR DHCP D'ACCÈS DE BANDE LARGE

(30) Priority: 01.07.2003 CN 03139699
(43) Date of publication of application: 26.07.2006
(73) Proprietor: ZTE Corporation, Shenzhen City, Guangdong Province 518057 (CN)
(72) Inventor: Sun, Peng, Shenzhen City, Guangdong Province 518057 (CN)
(74) Representative: Murgitroyd & Company
(86) International application number: PCT/CN2004/000669
(87) International publication number: WO 2005/004388

(56) References cited:
- WO-A2-99/13427
- US-B1- 6 298 383
- US-B1- 6 427 170
- US-B1- 6 427 170

## Description

### FIELD OF THE INVENTION

The present invention relates to a method of time charging for online user in a server in communication technology, especially relates to an improvement of a method time charging for DHCP online user in a broadband access server.

### BACKGROUND OF THE INVENTION

With popularization of data services, the requirement of Internet user's knowledge degree also increasingly lowers. An access mode of DHCP+WEB+RADIUS with a friendly interface does not require rich network technique knowledge at client terminals, and, therefore, this access mode is a more popular mode for numerous telecom service providers.

The document US6427170B1 discloses a method and apparatus for managing dynamic IP address allocation in a data communications network having a point of presence, a network access device associated with said point of presence, and user connections to users formed through the network access device. The system includes a protocol gateway in communication with the network access device, an authentication, authorization and accounting (AAA) server in communication with the protocol gateway, a dynamic IP allocation server in communication with the protocol gateway, a local memory in communication with the protocol gateway; and a local memory publisher, which periodically publishes the contents of the local memory over an information bus so that the contents may be received by subscribing entities.

The document WO99/13427 A2 discloses a telecommunications fraud detection system, wherein when fraud is detected, a detection layer generates alarms which are sent to an analysis layer; the analysis layer filters and consolidates the alarms to generate fraud cases, the analysis layer preferably generates a probability of fraud for each fraud case; an expert systems layer receives fraud cases and automatically initiates actions for certain fraud cases; a presentation layer also receives fraud cases for presentation to human analysts, the presentation layer permits the human analysts to initiate additional actions.

DHCP, an abbreviation of Dynamic Host Configuration Protocol, allows servers to dynamically assign IP address and other configure information to client terminals. DHCP clients can obtain and occupancy IP address as starting up, so this access mode occupies mass address resources of telecom service providers. Furthermore, DHCP access mode is unlike narrowband access that can supply a man-machine interface with a perfect connection and disconnection mechanism, so there is no a flat Rate mode launched in market, and at present only monthly flat rate is used. On one hand it wastes communication resources, and on the other hand service providers, with concerns on service level and return on investment, demand urgently a technology of accurate timing to realize flat rate for accessing DHCP users. Furthermore, many Service Providers desires that, when a DHCP user has been idle for a period of time, namely, when the user's communication data flow has been lower than an assigned value for a period of time, he might be considered as having been offline, and time charging for him should be stopped. In other words, it needs to detect a user's idle state. Once the user is detected in the idle state, the user's connection with the network should be should be disconnected, and meanwhile time charging of user online should be ceased. Therefore, login timing accuracy to DHCP users relies on timeliness and accuracy on detecting IDLE state.

Conventional detection methods of IDLE state all are in such way that directly configuring a timer, detecting periodically at each intervals, deciding whether an increment between user's data flow and the last check point is less than a threshold (assigned value); if not more than, considering user already offline; if more than, considering user normal online or downloading.

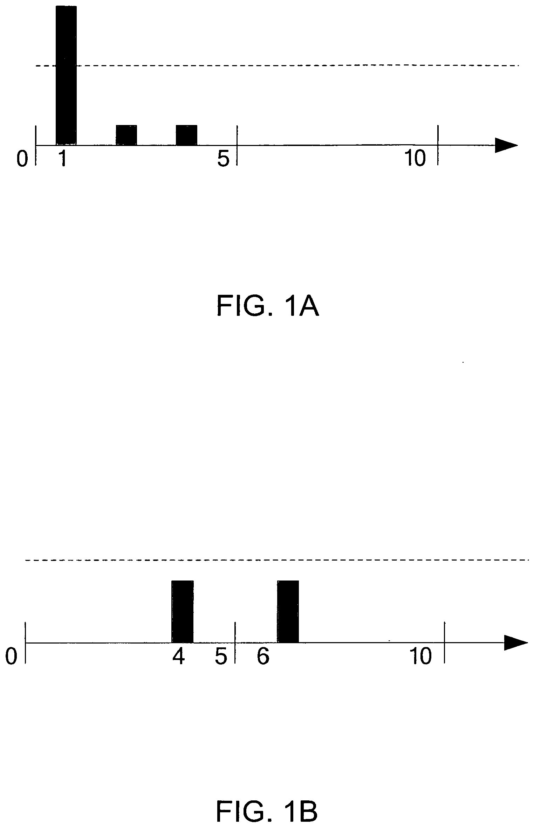

The current technology, however, has the following defects:
1. Due to inaccuracy of charging method, a user in idle state may be considered as in normal online state.
   As shown in FIG. 1A, a time interval for idle detection is supposed as 5 minutes, a user has a great deal flow at first one minute, and then flow does not exceed a threshold. According to a traditional algorithm, the user will be forced to login off at the tenth minute. Such detection error is certainly too large, and also can make a waste in communication resources. To solve the above problem, a traditional method for idle state detection usually adopts simply reducing intervals for detecting to decrease errors.
2. Time intervals are fixed and often results may distort.

As shown in FIG. 1B, if the user's flows are relatively large at the fourth and the sixth minute, but such flows are not large enough to exceed the threshold, the user will be forced to logoff at the tenth minute. In fact, his flow at an interval of five minutes exceeds the threshold, so the result distorts. To solve the problem above, a traditional method of idle state detection usually adopts increasing testing time to decrease frequency of results distorted.

It can be seen that there is a conflict here, and a conventional method is difficult to attain a desirable precision for time charging to DHCP users.

### SUMMARY OF INVENTION

The technical problem solved in the present invention is to provide a method of time charging to DHCP users in a broadband access server, which can reduce detection error, solve the problem in detecting idle state and satisfy the accuracy required.

In order to solve the problem above, the present invention provides a method according to claim 1. Preferred embodiments are covered by the dependent claims.

Also provided is a method of time charging to DHCP online users in a broadband access server, wherein the broadband access server detects data flow of an authenticated user by using an inner time interval shorter than an outer time interval and a flow threshold, and producing a circular linked list corresponding to the user, and decides whether the user is in IDLE state; if not, the server records the present flow value in the circular link list and goes on to detect the data flow; if yes, the server decides the user in IDLE state. By reducing the time unit for detecting, the detection error is demoted, the problem of detecting IDLE state is solved, and the required precision is satisfied.

The technical solution and its advantage effects of the present invention will be obvious through describing of the preferred embodiments of the present invention in details below in combination with drawings attached.

### DESCRIPTION OF THE DRAWINGS

FIG. 1A and 1B are schematic diagrams of data traffic detection according to a prior art;
FIG. 2 shows a main flow chart for a method of time charging to DHCP online users in broadband access server according to the present invention;
FIG. 3 is a flow chart of detection for each inner detection period in the method according to the present invention; and
FIG. 4 is a schematic diagram of data structure realized by software of the method according to the present invention.

### DETAILED DESCRIPTION OF THE INVENTION

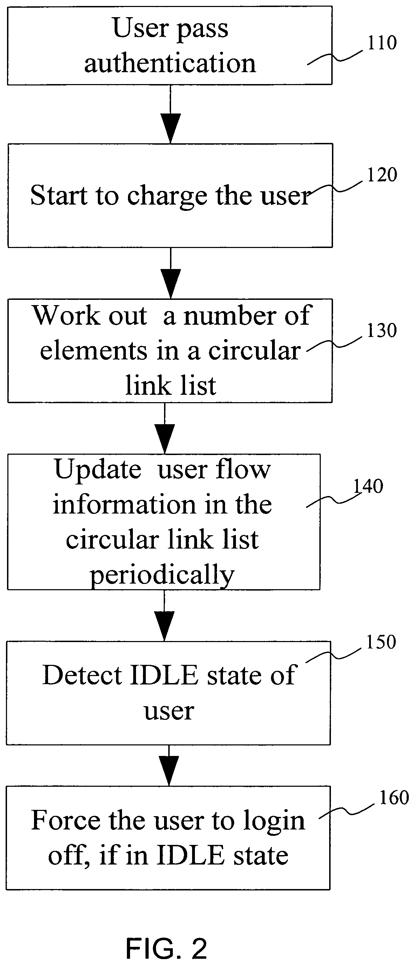

A method of time charging to DHCP online users in a broadband access server according to the present invention comprises the following steps:
Firstly, an outer time and an inner time need to be configured in a broadband access server for detecting idle state, since an idle mode is used to detect a logout state of the user. In general, the broadband access server always counts user traffic, in which a unit of an interval (inner time) for counting the traffic in broadband server is second, and a unit of an interval (outer time) for detecting idle state at outside of the system is minute. In the present invention, an interval for counting user traffic must be smaller than a time set for outside idle state detection. For example, an outer detection time may be set as 5 minutes, a threshold is 10k, a time set for detecting traffic within the system, namely inner time, is 30 seconds. Referring to FIG. 2, the time charging method for DHCP users is described as below.

Step 110: A user automatically obtains IP address by DHCP, is authenticated successfully, and then accesses the Internet; and the access server timely informs a charging service to start time charging to the user accessed.

Step 120: The time charging starts from the time when the user is authenticated successfully. In general, the user's passing through authentication denotes that the user starts to accept service provided by the service provider.

Step 130: The broadband access server calculates a number of elements in a circular link list according to the inner time and the outer time configured. The number of elements equals to the ratio of the outer time to the inner time. For example, in this embodiment, the number of elements is the ratio of 5 to 0.5 and equals to 10. The broadband access server records the result calculated.

Step 140: The information on the user traffic is periodically updated.

Step 150: Idle state of the user is detected.

Step 160: The user in idle state is forced to logoff.

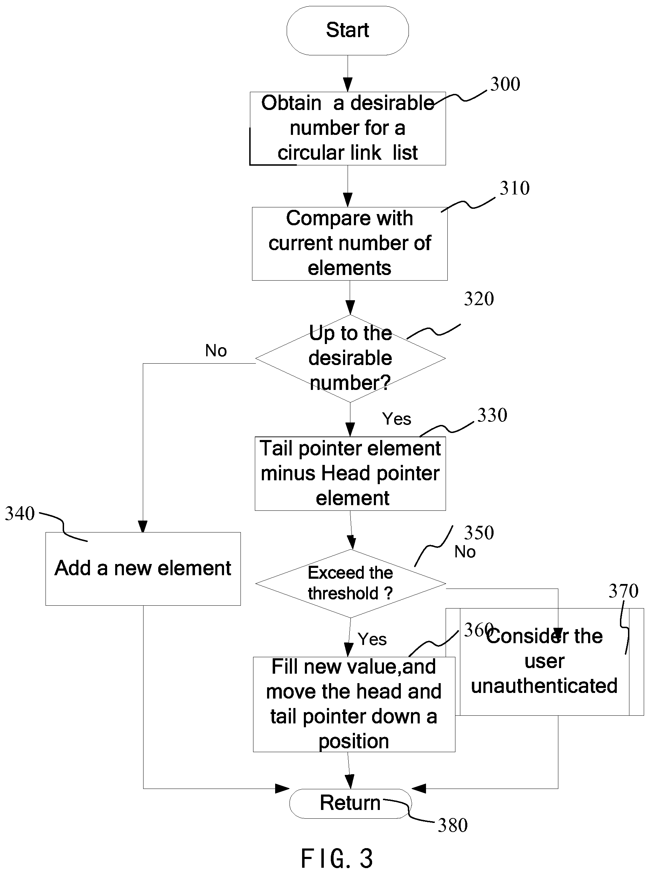

Referring to FIG. 3, the flow chart of the circular link list is shown. Each accessed and authenticated user is corresponding to a circular link list. In a process of recording the corresponding user's data traffic, a pointer is used to point a head pointer of the circular link list. The content of an element of the head pointer is traffic value before an idle detection interval, and the content of an element pointed by a tail pointer is the latest traffic result detected.

The user's circular link list is not full when the user just passes the authentication. Then, at first, whether the number of elements in the circular link list is up to 10 or not is checked. If not up to 10, an element is added at each interval of the inner time, the content of the head pointer is filled with data traffic result reported, the element newly added is added to the tail of the circular link list, and the tail pointer points to the element new added. Particularly, each new data traffic value is compared with the content of the head pointer in the circular link list, after compared, if the user is not in idle state, such new data traffic value is saved in the content of the head pointer. At the same time, the head and tail pointers move down one position, so as to ensure that the content of the element of the head pointer still is traffic value before one idle detecting interval and the content of the element pointed by the tail pointer still is the latest data traffic result detected.

If the circular link list is full (up to 10), new data traffic value detected is compared with the content of the element of the head pointer; if the comparing result exceeds the assigned threshold, the new data traffic value overwrites the content of the head pointer, and, meanwhile, the head and tail pointers move down one position, so as to ensure that the content of an element of the head pointer still is traffic value before one IDLE detecting interval and the content of the element pointed by the tail pointer still is newly data traffic result detected.

If the comparing value does not exceed the assigned threshold 10k, the user is considered being offline; and then the broadband access server sets the user in unauthenticated state, that is to say, the user is forced to logoff. Meanwhile, the broadband access server informs RADIUS Serve of user being offline and stopping time charging. The time when the user logs off is considered as the time before 5 minutes.

The flow chart of the method according to the present invention is shown in FIGS. 2 and 3. The broadband access server starts to query the user's data traffic. Firstly, step 300 is performed to work out the number of elements in the corresponding circular link list, and, while detecting the user's data traffic, step 310 is performed to compare with the number of elements in the current circular link list. Then step 320 is performed to decide whether a desirable number of elements is achieved. If not, step 340 is performed to fill the detection result to the content of the head pointer and make the tail pointer point to the new element, meanwhile, the head and tail pointers move down one position, and data traffic is detected for a next inner time. If the number of elements in the circular link list exceeds a desirable number, step 330 is performed to decide whether a value of comparing the element of the tail pointer and the content of the head pointer exceeds the assigned threshold (step 350). If exceeds, step 360 is performed to move the head and tail pointers down one position, and the new data traffic is filled to the content of the head pointer. If not exceeds, step 370 is performed and the broadband access server sets the user in unauthenticated state and forces the user offline.

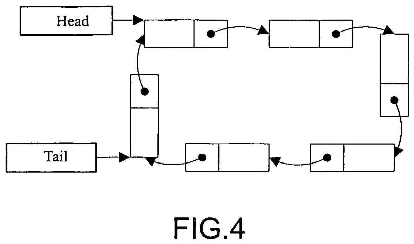

In the system of the present invention, the results of detecting on data traffic of the user in late period of time are saved one by one, which corresponds to that a queue of the user's traffic data is observed through a data window, and the width of the window is width of the inner time for detecting traffic assigned for the user. In this window, multiple detecting results are saved, the interval of each result is the inner time for detecting traffic in the system, as shown is FIG. 4.

In the system of the present invention, when data traffic of the user is queried once, the data window goes forward a position. While moving, the traffic results at the two ends of the window are compared; if a value of comparing does not exceeds the threshold, the user is considered in an idle state and forced to be offline; otherwise, new data detected is filled into the content of the head pointer.

### Industrial applicability

According to conventional algorithms for realizing IDLE detection, in general, the granularity of detection is the interval assigned for detecting, such as 5 minutes. However, according to the algorithm of the present invention, the detection granularity is the inner time for querying user data traffic in the system, such as 30 seconds, so the detection is more accurate.

It should be noted that the inner time and the outer time in the method of the present invention could be assigned. The specific value mentioned above is one embodiment of the present invention, which can not be used to limit the protection scope of the present invention, which is defined by the appended claims.

It should be noted that, the person skilled in the art should understand that, the technical solutions of the present invention are defined by the scope of the appended claims.

## Claims

1. A method of time charging to DHCP online users in a broadband access server, comprising the following steps:
a) setting an inner time interval, an outer time interval and a flow threshold for counting data flow of users in the broadband access server, wherein the inner time interval is used for monitoring user flow in the broadband access server, the outer time interval is used for detecting idle state at outside of a system, and the inner time interval is shorter than the outer time interval;
b) starting time charging to users by instruction of the access server (120) after users access the access server and are authenticated successfully (110);
c) establishing a circular link list to each user for recording data flow of the user in the access server;
d) defining a number of elements in the circular link list as a multiple of the outer time interval to the inner time interval in the access server (130, 300); and
e) detecting data flow of the user according to the inner time interval in the access server, and recording the data flow as a content of an element of a head pointer of the circular link list in turn, until data flow newly detected and the content recorded in the element of the head pointer are not more than the flow threshold,
wherein when the circular link list is not full, the method further comprises the following step in step e):
e1) comparing each new data flow value with the content of the element of the head pointer in the circular link list, after compared, if the user is not in idle state, saving the new data flow value in the content of the element of the head pointer (360) and meanwhile, moving the head and tail pointers down one position, so as to ensure that the content of the element of the head pointer still is flow value before one idle detecting interval and the content of the element pointed by the tail pointer still is the latest data flow result detected;
when the circular link list is full, the method further comprises the following step in step e):
e2) comparing new data flow value detected with the content of the element of the head pointer (330), if the comparing result exceeds the flow threshold, the new data flow value overwriting the content of the element of the head pointer, and meanwhile, moving the head and tail pointers down one position (360), so as to ensure that the content of the element of the head pointer still is flow value before one idle detecting interval and the content of the element pointed by the tail pointer still is the latest data flow result detected;
the method further comprises:
f) deciding that the user is in idle state in the access server when the comparing result of the content of the element of the tail pointer minus the content of the element of the head pointer (330) does not exceed the flow threshold (350); and
g) stopping time charging to the user by instruction of the access server.

2. The method of claim 1, wherein the method further comprises setting the user in unauthenticated state (370) in step f).

3. The method of claim 1 or 2, wherein the method further comprises setting a charging server for time charging to online users in step b).

4. The method of claim 3, wherein the time for the charging server to stop time charging is before an outer time interval corresponding to the inner time interval when the idle state is detected.

5. The method of claim 2, wherein the inner time interval is 30 seconds and/or the outer time interval is 5 minutes.

## Patentansprüche

1. Ein Verfahren zur Zeitgebührenerfassung für DHCP-Online-Benutzer in einem Breitbandzugangsserver, das die folgenden Schritte beinhaltet:
a) Festlegen eines inneren Zeitintervalls, eines äußeren Zeitintervalls und eines Flussschwellenwerts zum Zählen des Datenflusses von Benutzern in dem Breitbandzugangsserver, wobei das innere Zeitintervall zum Überwachen des Benutzerflusses in dem Breitbandzugangsserver verwendet wird, das äußere Zeitintervall zum Erfassen eines Ruhezustands außerhalb eines Systems verwendet wird und das innere Zeitintervall kürzer als das äußere Zeitintervall ist;
b) Starten der Zeitgebührenerfassung für Benutzer durch Anweisen des Zugangsservers (120), nachdem Benutzer auf den Zugangsserver Zugang erhalten haben und erfolgreich authentifiziert worden sind (110);
c) Erstellen einer kreisförmigen Linkliste für jeden Benutzer zum Aufzeichnen des Datenflusses des Benutzers in dem Zugangsserver;
d) Definieren einer Anzahl von Elementen in der kreisförmigen Linkliste als ein Verhältnis des äußeren Zeitintervalls hinsichtlich des inneren Zeitintervalls in dem Zugangsserver (130, 300); und
e) Erfassen des Datenflusses des Benutzers gemäß dem inneren Zeitintervall in dem Zugangsserver und Aufzeichnen des Datenflusses als einen Inhalt eines Elements eines Kopfzeigers der kreisförmigen Linkliste nacheinander, bis der neu erfasste Datenfluss und der in dem Element des Kopfzeigers aufgezeichnete Inhalt nicht mehr als der Flussschwellenwert sind,
wobei, wenn die kreisförmige Linkliste nicht voll ist, das Verfahren ferner den folgenden Schritt in Schritt e) beinhaltet:
e1) Vergleichen jedes neuen Datenflusswertes mit dem Inhalt des Elements des Kopfzeigers in der kreisförmigen Linkliste, nach dem Vergleich, wenn sich der Benutzer nicht im Ruhezustand befindet, Speichern des neuen Datenflusswertes in dem Inhalt des Elements des Kopfzeigers (360), und währenddessen, Bewegen des Kopf- und Abschlusszeigers um eine Position nach unten, um sicherzustellen, dass der Inhalt des Elements des Kopfzeigers immer noch der Flusswert vor einem Ruhezustanderfassungsintervall ist und der von dem Abschlusszeiger gezeigte Inhalt des Elements immer noch das zuletzt erfasste Datenflussergebnis ist;
wenn die kreisförmige Linkliste voll ist, beinhaltet das Verfahren ferner den folgenden Schritt in Schritt e):
e2) Vergleichen des erfassten neuen Datenflusswertes mit dem Inhalt des Elements des Kopfzeigers (330), wenn das Vergleichsergebnis den Flussschwellenwert überschreitet, wobei der neue Datenflusswert den Inhalt des Elements des Kopfzeigers überschreibt, und währenddessen, Bewegen der Kopf- und Abschlusszeiger um eine Position nach unten (360), um sicherzustellen, dass der Inhalt des Elements des Kopfzeigers immer noch der Flusswert vor einem Ruhezustanderfassungsintervall ist und der von dem Abschlusszeiger gezeigte Inhalt des Elements immer noch das zuletzt erfasste Datenflussergebnis ist;
wobei das Verfahren ferner Folgendes beinhaltet:
f) Entscheiden, dass sich der Benutzer in dem Zugangsserver im Ruhezustand befindet, wenn das Vergleichsergebnis des Inhalts des Elements des Abschlusszeigers minus dem Inhalt des Elements des Kopfzeigers (330) den Flussschwellenwert (350) nicht überschreitet; und
g) Stoppen der Zeitgebührenerfassung für den Benutzer durch Anweisen des Zugangsservers.

2. Verfahren gemäß Anspruch 1, wobei das Verfahren ferner das Einstellen des Benutzers auf den nicht authentifizierten Zustand (370) in Schritt f) beinhaltet.

3. Verfahren gemäß Anspruch 1 oder 2, wobei das Verfahren ferner das Einstellen eines Gebührenservers auf Zeitgebührenerfassung für Online-Benutzer in Schritt b) beinhaltet.

4. Verfahren gemäß Anspruch 3, wobei die Zeit, die der Gebührenserver zum Stoppen der Zeitgebührenerfassung braucht, vor einem äußeren Zeitintervall liegt, das dem inneren Zeitintervall entspricht, wenn der Ruhezustand erfasst worden wird.

5. Verfahren gemäß Anspruch 2, wobei das innere Zeitintervall 30 Sekunden beträgt und/oder das äußere Zeitintervall 5 Minuten beträgt.

## Revendications

1. Un procédé de facturation au temps pour des utilisateurs en ligne DHCP dans un serveur d'accès à large bande, comprenant les étapes suivantes :
a) réglage d'un intervalle de temps interne, d'un intervalle de temps externe et d'un seuil de flux pour compter un flux de données d'utilisateurs dans le serveur d'accès à large bande, l'intervalle de temps interne étant utilisé pour surveiller un flux d'utilisateurs dans le serveur d'accès à large bande, l'intervalle de temps externe étant utilisé pour détecter un état inactif à l'extérieur d'un système, et l'intervalle de temps interne étant plus court que l'intervalle de temps externe ;
b) démarrage de facturation au temps pour des utilisateurs par instruction du serveur d'accès (120) après que des utilisateurs ont accédé au serveur d'accès et ont été authentifiés avec succès (110) ;
c) établissement d'une liste chaînée circulaire pour chaque utilisateur pour enregistrer un flux de données de l'utilisateur dans le serveur d'accès ;
d) définition d'un nombre d'éléments dans la liste chaînée circulaire comme étant un rapport de l'intervalle de temps externe sur l'intervalle de temps interne dans le serveur d'accès (130, 300) ; et
e) détection d'un flux de données de l'utilisateur conformément à l'intervalle de temps interne dans le serveur d'accès, et enregistrement du flux de données comme contenu d'un élément d'un pointeur de tête de la liste chaînée circulaire tour à tour, jusqu'à ce qu'un flux de données nouvellement détecté et le contenu enregistré dans l'élément du pointeur de tête ne soient pas supérieurs au seuil de flux,
dans lequel quand la liste chaînée circulaire n'est pas pleine, le procédé comprend en outre l'étape suivante dans l'étape e) :
e1) comparaison de chaque nouvelle valeur de flux de données au contenu de l'élément du pointeur de tête dans la liste chaînée circulaire, après comparaison, si l'utilisateur n'est pas dans l'état inactif, sauvegarde de la nouvelle valeur de flux de données dans le contenu de l'élément du pointeur de tête (360), et pendant ce temps, déplacement des pointeurs de tête et de queue d'une position vers le bas, de manière à assurer que le contenu de l'élément du pointeur de tête soit toujours une valeur de flux avant un intervalle de détection d'inactivité et que le contenu de l'élément vers lequel pointe le pointeur de queue soit toujours le résultat de flux de données détecté le plus récent ;
quand la liste chaînée circulaire est pleine, le procédé comprend en outre l'étape suivante dans l'étape e) :
e2) comparaison d'une nouvelle valeur de flux de données détectée au contenu de l'élément du pointeur de tête (330), si le résultat de comparaison dépasse le seuil de flux, écrasement du contenu de l'élément du pointeur de tête par la nouvelle valeur de flux de données, et pendant ce temps, déplacement des pointeurs de tête et de queue d'une position vers le bas (360), de manière à assurer que le contenu de l'élément du pointeur de tête soit toujours une valeur de flux avant un intervalle de détection d'inactivité et que le contenu de l'élément vers lequel pointe le pointeur de queue soit toujours le résultat de flux de données détecté le plus récent ;
le procédé comprend en outre :
f) la décision du fait que l'utilisateur est dans l'état inactif dans le serveur d'accès quand le résultat de comparaison du contenu de l'élément du pointeur de queue moins le contenu de l'élément du pointeur de tête (330) ne dépasse pas le seuil de flux (350) ; et
g) l'arrêt de la facturation au temps pour l'utilisateur par instruction du serveur d'accès.

2. Le procédé de la revendication 1, le procédé comprenant en outre la mise de l'utilisateur à l'état non authentifié (370) à l'étape f).

3. Le procédé de la revendication 1 ou de la revendication 2, le procédé comprenant en outre le réglage d'un serveur de facturation pour une facturation au temps pour des utilisateurs en ligne à l'étape b).

4. Le procédé de la revendication 3, dans lequel le moment pour le serveur de facturation d'arrêter la facturation au temps est avant un intervalle de temps externe correspondant à l'intervalle de temps interne lorsque l'état inactif est détecté.

5. Le procédé de la revendication 2, dans lequel l'intervalle de temps interne est de 30 secondes et/ou l'intervalle de temps externe est de 5 minutes.
